# EUROPEAN PATENT APPLICATION

(11) **EP 4 685 693 A1**
(43) Date of publication of application: **28.01.2026**
(21) Application number: 24774418.8
(22) Date of filing: 23.01.2024
(51) Int. Cl.: G06K 19/073, G06K 19/07, G06K 19/077

(54) **PORTABLE ELECTRONIC DEVCIE AND CONTROL METHOD FOR PORTABLE ELECTRONIC DEVICE**

(30) Priority: 20.03.2023 JP 2023044691
(71) Applicant: KABUSHIKI KAISHA TOSHIBA, Minato-ku Tokyo 105-0023 (JP)
(72) Inventor: TANGE, Daisuke, Kawasaki-shi, Kanagawa 212-0013 (JP)
(74) Representative: HKW Intellectual Property PartG mbB
(86) International application number: PCT/JP2024/001806
(87) International publication number: WO 2024/195272

(57) **Abstract**

A portable electronic device according to an embodiment includes a processor that executes a first process according to a command received from an external device. The processor determines whether a disabling condition is satisfied by using command reception as a trigger, executes a disabling process of disabling a predetermined function of a second process different from the first process and then executes the first process when the disabling condition is satisfied, and executes the first process without executing the disabling process when first date data does not exceed second date data.

## Description

### FIELD

Embodiments of the present invention relate to a portable electronic device and a method for controlling a portable electronic device.

### BACKGROUND

When a function mounted on a portable electronic device such as an IC card is disabled, generally, a disabling command is explicitly transmitted to the IC card. If the function is disabled during issuance of the IC card, the function can be disabled by processing a special management command (instruction) according to an intention of an issuer (an issuing source of the IC card).

### CITATION LIST

### Patent Literature

Patent Literature 1: JP 2008-287602 A

### SUMMARY OF THE INVENTION

### Problem to be Solved by the Invention

That is, in the related art, when a specific function of an IC card is disabled, a command that disables functions other than transaction during operation needs to be transmitted to the IC card. Therefore, management burden on a user or an administrator is large.

Provided is a portable electronic device and a control method for a portable electronic device capable of disabling a specific function of the portable electronic device even during operation without requiring manual means.

### Means for Solving Problem

A portable electronic device according to an embodiment includes a processor that executes a first process according to a command received from an external device. The processor: determines whether first date data included in the command exceeds second date data as a reference; when the first date data exceeds the second date data, executes a disabling process of disabling a predetermined function of a second process different from the first process and then executes the first process; and when the first date data does not exceed the second date data, executes the first process without executing the disabling process.

### BRIEF DESCRIPTION OF DRAWINGS

FIG. 1 is a configuration diagram illustrating a schematic example of an IC card processing system according to a first embodiment.
FIG. 2 is a diagram illustrating an example of a management table stored in a storage unit of an IC card.
FIG. 3 is a flowchart illustrating an example of a flow of a disabling process according to the first embodiment.
FIG. 4 is a flowchart illustrating an example of a flow of a command process after the disabling process according to the first embodiment.
FIG. 5 is a flowchart illustrating an example of a flow of a disabling process according to a second embodiment.
FIG. 6 is a flowchart illustrating an example of a flow of a disabling process according to a third embodiment.

### DETAILED DESCRIPTION

### (First Embodiment)

Hereinafter, a portable electronic device and a control method for a portable electronic device according to embodiments will be described with reference to the drawings. Note that portions denoted by the same reference numerals perform similar operations, and redundant description will be omitted as appropriate. The following embodiments do not limit the disclosed technology. The embodiments can be appropriately combined with each other within a range in which processing contents do not contradict each other.

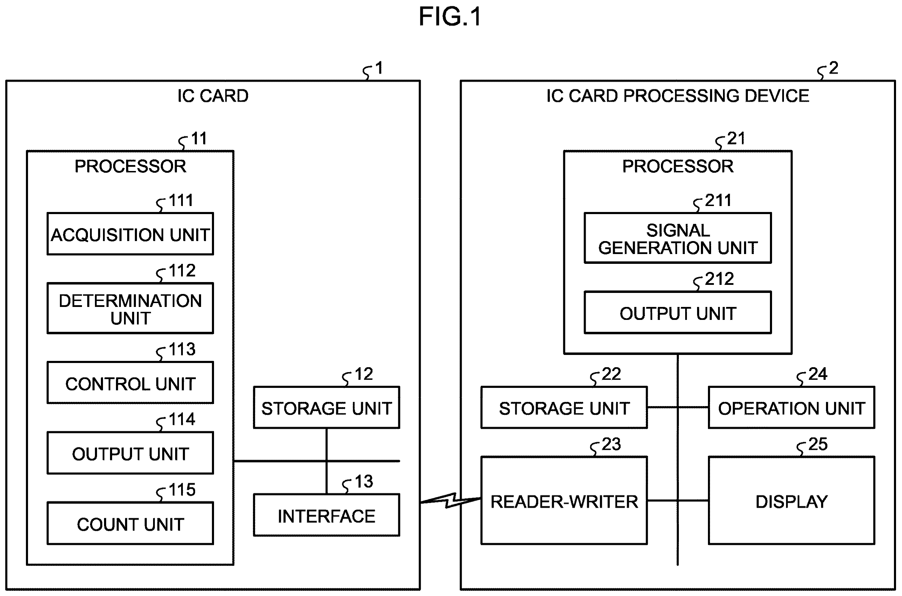

FIG. 1 is a configuration diagram illustrating a schematic example of an IC card processing system S according to an embodiment. The IC card processing system S according to the embodiment includes an IC card 1 and an IC card processing device 2.

The IC card 1 is a card having a size of, for example, 85.6 mm × 54 mm × 0.76 mm, and the IC card 1 is a contact-type card that is loaded into the IC card processing device 2 and performs communication, or a non-contact type card that is held over the IC card processing device 2 and performs communication. Alternatively, the IC card 1 is a combination type card that supports a contact type and a non-contact type.

The IC card processing device 2 is installed at an entrance/exit port of a facility such as a store or a station, and the IC card processing device 2 corresponding to the IC card 1 of a combination type or a non-contact type communicates with the IC card 1 held by the user, transmits information to the IC card 1, and receives information from the IC card 1. The IC card processing device 2 communicates with the inserted IC card 1, transmits information to the IC card 1, and receives information from the IC card 1. Many IC cards 1 are distributed in the market, and the IC card processing devices 2 installed in various facilities communicate with the IC card 1 held by the user or the inserted IC card 1.

As illustrated in FIG. 1, the IC card 1 includes a processor 11, a storage unit 12 (memory), and an interface 13.

The processor 11 is a central processing unit (CPU) or the like, and executes various processes such as calculation and control based on a program stored in a program memory such as a read only memory (ROM) of the storage unit 12.

The processor 11 includes an acquisition unit 111, a determination unit 112, a control unit 113, an output unit 114, and a count unit 115. The processor 11 operates based on a program stored in the program memory, and implements the functions of each unit.

In particular, the processor 11 implements the functions of the acquisition unit 111, the determination unit 112, the control unit 113, and the output unit 114, and executes an automatic deactivation process of a specific function of the IC card 1 (hereinafter, also simply referred to as "automatic disabling process").

Here, the automatic disabling process automatically disables a fragile specific function of the IC card 1 even during operation of the IC card 1 without requiring manual operation or a disabling instruction from an external device such as the IC card processing device 2. Hereinafter, for specific description, it is assumed that a specific function as a target of the automatic disabling process is a function used in an encryption process. However, other functions can be adopted as the fragile specific function to be disabled. Specific contents of the automatic disabling process will be described later in detail. Note that an operation command is an example of a first process, and an encryption process is an example of a second process.

The acquisition unit 111 acquires an external signal transmitted from an external device such as the IC card processing device 2 via the interface 13. For example, the acquisition unit 111 acquires a command transmitted from an external device such as the IC card processing device 2. The acquisition unit 111 acquires various types of information stored in the storage unit 12.

The determination unit 112 analyzes the command acquired by the acquisition unit 111 in the automatic disabling process. The determination unit 112 determines whether a disabling condition is satisfied using an analysis result with the acquisition unit 111 acquiring a specific command as a trigger.

Here, the disabling condition is a condition for determining whether to disable a specific function of the encryption process. In the first embodiment, an example of the disabling condition is that date data received during operation transaction passed a reference date. The reference date may be specified from the outside in advance, or may be programmed as a predetermined date.

In the automatic disabling process, when the determination unit 112 determines that the disabling condition is satisfied, the control unit 113 disables a specific function of the encryption process. Specifically, when the determination unit 112 determines that the date data included in the command received during the operation transaction passed the reference date, the control unit 113 disables a specific function related to the encryption process. Note that disabling the specific function includes at least one of resetting data related to the function, deleting data related to the function, and turning on a disabling flag.

The output unit 114 outputs a predetermined response signal to the external device via the interface 13. For example, when receiving a command that uses a function disabled by the automatic disabling process, the output unit 114 outputs an error response signal to the external device via the interface 13.

The count unit 115 writes the execution count of each operation command in the storage unit 12 in response to execution of the operation command by the control unit 113.

The storage unit 12 includes a ROM, a random access memory (RAM), a nonvolatile memory, and the like, and the ROM and the nonvolatile memory that are non-transitory computer-readable media store programs such as an operating system or application software for operating the processor 11. The ROM and the nonvolatile memory store data and the like used when the processor 11 performs various processes. The RAM stores data temporarily used when the processor 11 performs various processes.

In particular, the storage unit 12 stores a management table used in the automatic disabling process.

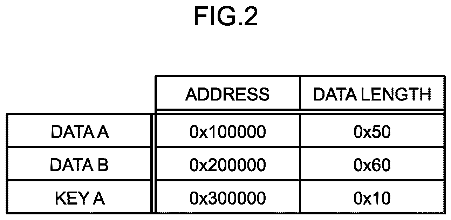

FIG. 2 is a diagram illustrating an example of the management table stored in the storage unit of the IC card. In FIG. 2, "data A" and "data B" are data used in the encryption process, and are, for example, a part of information used in basic access control (BAC) in symmetric encryption. In FIG. 2, "address" indicates a location (address) at the storage unit 12 in which "data A" and "data B" are stored. "Data length" indicates a length of data of each of "data A" and "data B".

It can be seen from the management table illustrated in FIG. 2 that the data A is stored as data having a byte length from an address 0x100000 to 0x50. That is, the data A is stored in an address 0x100000 to 0x10004F.

Returning to FIG. 1, the interface 13 communicates with the IC card processing device 2, receives information from the IC card processing device 2, and transmits information to the IC card processing device 2. For example, the interface 13 receives an external signal such as a command and a reset request signal from the IC card processing device 2. The interface 13 outputs an error response signal from the output unit 114 to the IC card processing device 2.

As illustrated in FIG. 1, the IC card processing device 2 includes a processor 21, a storage unit 22, a card reader-writer 23, an operation unit 24, a display 25, and the like.

The processor 21 is a CPU or the like, and executes various processes such as calculation and control based on a program stored in a program memory such as a ROM of the storage unit 22. The processor 11 operates based on the program stored in the program memory.

The processor 21 transmits a command and a reset request signal to the IC card 1 via the card reader-writer 23. The processor 21 executes various processes based on a response signal to a command to the IC card 1. The processor 21 outputs a command to the IC card 1 via the card reader-writer 23, writes data in the IC card 1, and rewrites data in the IC card 1.

For example, the processor 21 includes a signal generation unit 211 and an output unit 212. The processor 21 operates based on the program stored in the program memory, and implements the functions of each unit.

The signal generation unit 211 generates a signal related to the operation command. The output unit 212 outputs various signals via the card reader-writer 23.

The storage unit 22 includes a ROM, a RAM, a nonvolatile memory, and the like, and the ROM and the nonvolatile memory that are non-transitory computer-readable media store programs such as an operating system or application software for operating the processor 21. The ROM and the nonvolatile memory store data and the like used when the processor 21 performs various processes. The RAM stores data temporarily used when the processor 21 performs various processes.

The card reader-writer 23 is an interface for transmitting and receiving data to and from the IC card 1. The card reader-writer 23 includes an antenna, a contact terminal, a communication control unit, and the like, communicates with the IC card 1 of combination type or a non-contact type in a non-contact manner via the antenna, and communicates with the IC card 1 of a combination type or a contact type by physically and electrically connecting to the IC card 1 via a contact terminal.

The operation unit 24 receives an input instruction from an operator of the IC card processing device 2. The operation unit 24 transmits input data corresponding to the received input instruction to the processor 21. The operation unit 24 is, for example, a keyboard, a numeric keypad, a touch panel, or the like.

The display 25 is a display device that displays various types of information under control of the processor 21, and displays a message related to an error response received from the IC card 1. The display 25 is, for example, a liquid crystal monitor. The display 25 may be formed integrally with the operation unit 24, for example.

### (Automatic Disabling Process)

Next, the automatic disabling process executed by the IC card 1 will be described.

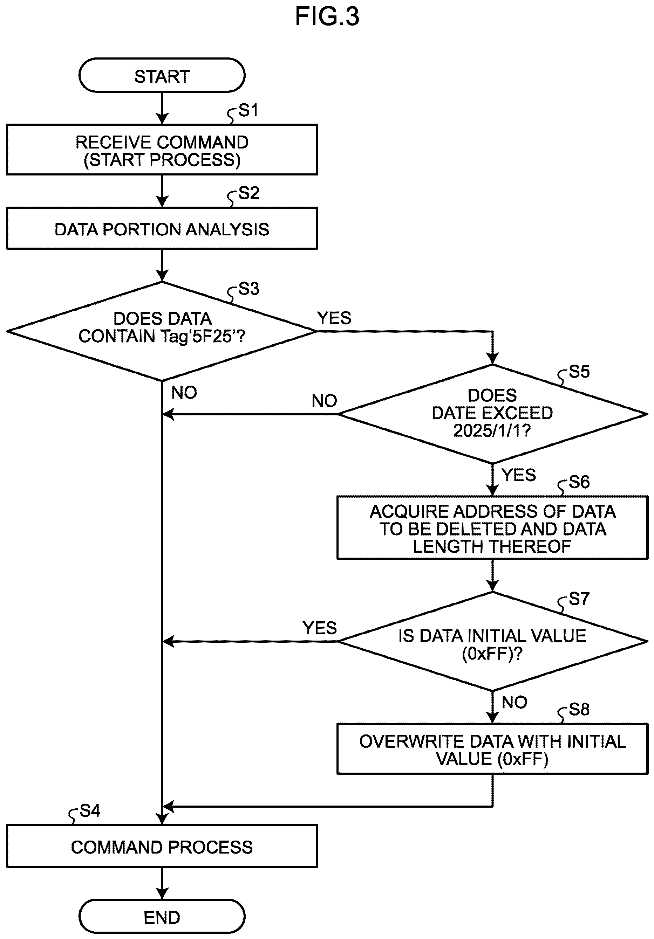

FIG. 3 is a flowchart illustrating an example of a flow of a disabling process according to the first embodiment. Note that, in the processing of FIG. 3, for example, it is assumed that, when the process is desired to be transitioned from an access control implemented by symmetric encryption (basic access control, hereinafter also referred to as "BAC") to an access control that provides a session key using asymmetric encryption with a higher security level (password authenticated connection establishment, hereinafter also referred to as "PACE"), the access control of BAC is automatically disabled.

As illustrated in FIG. 3, the acquisition unit 111 of the IC card 1 receives a predetermined operation command including a date in the data portion (step S1). As a result, the automatic disabling process is started.

The determination unit 112 analyzes the command acquired by the acquisition unit 111 (step S2).

In the following, for specific description, it is assumed that the operation command acquired by the acquisition unit 111 is a PERFORM SECURITY OPERATION command, and a data portion of the command includes a certificate effective date (Tag'5F25') or the like as date data of a signature.

As a result of analysis, the determination unit 112 determines whether Tag'5F25' is included in data of the command (step S3).

When the determination unit 112 determines that Tag'5F25' is not included in the data of the command (No in step S3), the control unit 113 executes a process according to the command (command process) (step S4), and then ends the process.

Meanwhile, when determining that Tag'5F25' is included in the data of the command (Yes in step S3), the determination unit 112 determines whether the date of Tag'5F25' passed a reference date (for example, "2025/1/1") (step S5).

When the determination unit 112 determines that the date of Tag'5F25' did not pass the reference date "2025/1/1" (No in step S5), the control unit 113 executes the command process (step S4), and then ends the process.

Meanwhile, when the determination unit 112 determines that the date of Tag'5F25' did pass the reference date "2025/1/1" (Yes in step S5), the control unit 113 accesses the management table in the storage unit 12, and acquires an address of the data to be deleted and the data length thereof (step S6).

The control unit 113 accesses the storage unit 12 based on the acquired address and data length, and determines whether the data to be deleted corresponds to an initial value by data length (0xFF) (step S7).

When determining that the data to be deleted corresponds to the initial value by data length (0xFF) from the address (Yes in step S7), the control unit 113 executes the command process (step S4), and then ends the process.

Meanwhile, when determining that the data to be deleted does not correspond to the initial value for data length (0xFF) from the address (No in step S7), the control unit 113 overwrites the initial value for data length (0xFF) from the address (step S8). Thereafter, the control unit 113 executes the command process (step S4) and ends the process.

### (Command Execution Process After Automatic Disabling Process)

Next, an example of command process execution after the automatic disabling process will be described.

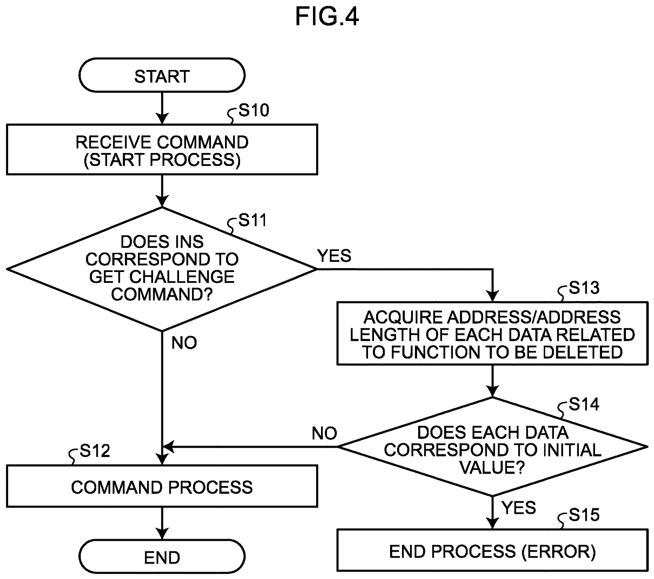

FIG. 4 is a flowchart illustrating an example of a flow of the command process execution after the automatic disabling process. Note that FIG. 4 illustrates an example of using a function disabled by the automatic disabling process not using a disabling flag.

As illustrated in FIG. 4, the acquisition unit 111 of the IC card 1 receives a predetermined operation command (step S10). As a result, the command process after the automatic disabling process is started.

The determination unit 112 analyzes the command acquired by the acquisition unit 111, and determines whether an INS portion corresponds to a GET CHALLENGE command (step S11).

When the determination unit 112 determines that the INS portion does not correspond to the GET CHALLENGE command (No in step S11), the control unit 113 executes the command process (step S12) and then ends the process.

Meanwhile, when the determination unit 112 determines that the INS portion corresponds to the GET CHALLENGE command (Yes in Step S11), the control unit 113 accesses the management table of the storage unit 12 and acquires the address and the address length of each data related to the function to be disabled (Step S13).

The control unit 113 accesses the storage unit 12 based on the acquired address and address length of each data, and determines whether each data related to the function to be disabled corresponds to an initial value (step S14).

When determining that each data related to the function to be disabled does not correspond to the initial value (No in step S14), the control unit 113 executes the command process (step S12), and then ends the process.

Meanwhile, when determining that each data related to the function to be disabled corresponds to the initial value (Yes in step S14), the control unit 113 determines that the function is deleted, interrupts the process, and controls the output unit 114 to output an error response (step S15).

The output unit 114 outputs an error response signal to the external device via the interface 13. As a result, for example, an error message is displayed on the display 25 of the IC card processing device 2.

Note that, in the automatic disabling process using the disabling flag, a determination process of "is BAC deletion (disabling) flag ON?" is executed instead of steps S13 and S14.

The IC card 1 as a portable electronic device according to the embodiment includes the processor 11 that executes a first process according to a command received from the IC card processing device 2 as the external device. The determination unit 112 implemented by the processor 11 determines whether first date data included in the command passed second date data as a reference. When the first date data passed the second date data, the control unit 113 implemented by the processor 11 executes the disabling process of disabling a predetermined function (for example, access control) of the second process (for example, encryption process) different from the first process, and then executes the first process. When the first date data did not pass the second date data, the control unit 113 executes the first process without executing the disabling process.

That is, for example, when the first date data of the signature included in the command passed the second date data as a reference, with the command reception as a trigger, the IC card 1 can automatically disable the fragile access control used in encryption. Therefore, the IC card 1 can automatically update software (perform disabling process of a fragile function) without newly receiving a special command for disabling from the IC card processing device 2 or the like as the external device. The user does not need manual means such as taking the IC card 1 to a predetermined facility and updating software. As a result, workload on the user, the management company, and the like can be reduced when updating the software of the IC card 1.

### (Second Embodiment)

Next, an IC card 1 according to a second embodiment will be described. In the second embodiment, when it is desired to transition from BAC to PACE and access control included in the command received from the external device is BAC, access control of BAC is automatically disabled using the disabling flag.

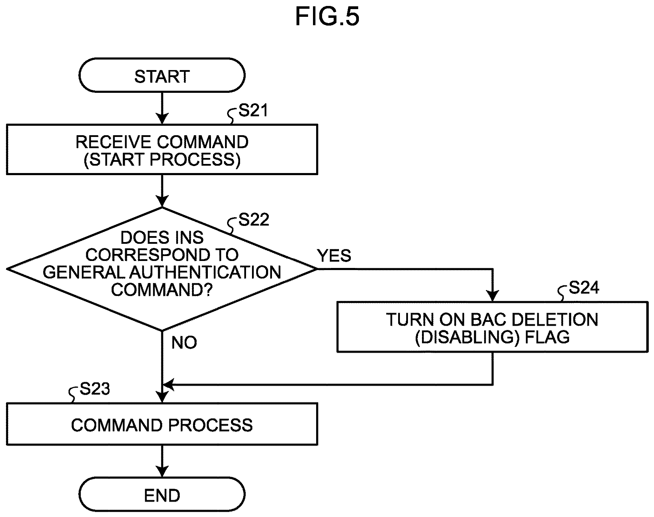

FIG. 5 is a flowchart illustrating an example of a flow of a disabling process according to the second embodiment. As illustrated in FIG. 5, the acquisition unit 111 of the IC card 1 receives a predetermined operation command (step S21). As a result, the automatic disabling process is started.

The determination unit 112 analyzes the command acquired by the acquisition unit 111, and determines whether the INS portion included in a command header portion corresponds to a GENERAL AUTHENTICATION command (general-purpose authentication command) (step S22).

When the determination unit 112 determines that the INS portion is not the GENERAL AUTHENTICATION command (that is, the access control is not BAC) (No in step S22), the control unit 113 executes the command process (step S23) and then ends the process.

Meanwhile, when the determination unit 112 determines that the INS portion is the GENERAL AUTHENTICATION command (that is, the access control is BAC) (Yes in step S22), the control unit 113 sets the BAC deletion (disabling) flag to ON (step S24).

After setting the BAC deletion flag to ON, the control unit 113 executes the command process (step S23) and then ends the process.

The IC card 1 according to the second embodiment described above includes the processor 11 that executes a predetermined process according to a command received from the IC card processing device 2. The determination unit 112 implemented by the processor 11 determines whether access control included in the command is predetermined access control (for example, BAC). When it is determined that access control included in the command is BAC, the control unit 113 implemented by the processor 11 executes the disabling process of disabling a function related to BAC, and then executes a predetermined process according to the command. When it is determined that access control included in the command is not BAC, a predetermined process according to the command is executed without executing the disabling process.

Therefore, the same effects as those of the IC card 1 according to the first embodiment can also be implemented by the IC card 1 according to the second embodiment.

### (Third Embodiment)

Next, an IC card 1 according to a third embodiment will be described. In the third embodiment, when it is desired to transition from BAC to PACE and the execution count of BAC when access control included in the command received from the external device is BAC exceeds a reference number, access control of BAC is automatically disabled using the disabling flag.

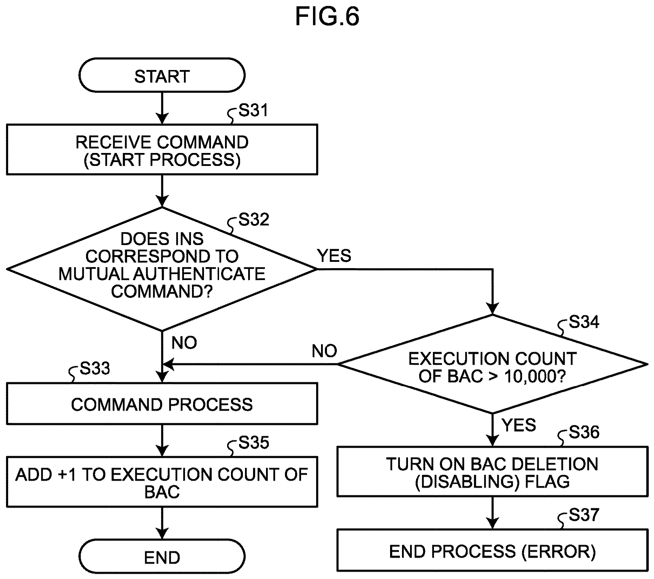

FIG. 6 is a flowchart illustrating an example of a flow of a disabling process according to the second embodiment. As illustrated in FIG. 6, the acquisition unit 111 of the IC card 1 receives a predetermined operation command (step S31). As a result, the automatic disabling process is started.

The determination unit 112 analyzes the command acquired by the acquisition unit 111, and determines whether the INS portion included in the command header portion corresponds to a MUTUAL AUTHENTICATE command (mutual authentication command) (step S32).

When the determination unit 112 determines that the INS portion does not correspond to the MUTUAL AUTHENTICATE command (No in step S32), the control unit 113 executes the command process (step S33).

After executing the command process, the control unit 113 adds +1 to the execution count of BAC and ends the process (step S35).

Meanwhile, when the determination unit 112 determines that the INS portion corresponds to the MUTUAL AUTHENTICATE command (Yes in step S32), the determination unit 112 determines whether the execution count of BAC exceeds a reference number (here, 10,000) (step S34).

When the determination unit 112 determines that the execution count of BAC did not exceed 10,000 (No in step S34), the control unit 113 executes the command process (step S33), modifies the execution count of AC to +1, and ends the process (step S35).

Meanwhile, when the determination unit 112 determines that the execution count of BAC exceeds 10,000 (Yes in step S34), the control unit 113 sets the BAC deletion flag to ON (step S36), outputs an error response from the output unit 114, and ends the operation without executing the command process (step S37). The error response output from the output unit 114 is transmitted to the IC card processing device 2 via the interface 13, for example, and is displayed on the display 25 as an error message.

The IC card 1 according to the second embodiment described above includes the processor 11 that executes a predetermined process according to a command received from the IC card processing device 2. The determination unit 112 implemented by the processor 11 determines whether access control included in the command is predetermined access control (for example, BAC). When determining that access control included in the command is BAC, the determination unit 112 determines whether the execution count of BAC exceeds the reference number. When the determination unit 112 determines that the execution count of BAC exceeds the reference number, the control unit 113 implemented by the processor 11 executes the disabling process of disabling BAC, and then ends the process without executing the predetermined process according to the command. When the determination unit 112 determines that the count number of execution of BAC does not exceed the reference number, the control unit 113 increments the execution count and executes a predetermined process including BAC. When the determination unit 112 determines that access control included in the command is not BAC, the control unit 113 executes a predetermined process according to the command.

Therefore, the same effects as those of the IC card 1 according to the first embodiment can also be implemented by the IC card 1 according to the third embodiment.

In the above embodiment, for specific description, an example of the portable electronic device being an IC card is described. The portable electronic device is not limited thereto and not limited to the IC card, and may be, for example, a mobile terminal such as a smartphone having a similar function.

Note that a transmission method described in each of the above embodiments can also be implemented by a program that can be executed by a computer. That is, it is also possible to construct a transmission system or a transmission method described in each of the above embodiments by storing a program for implementing the transmission method described in each of the above embodiments in a memory, reading the program from the memory by a processing circuit of a computer, and cooperating software and hardware resources.

Although some embodiments (and modifications) of the present invention are described above, the embodiments are presented as examples, and are not intended to limit the scope of the invention. The novel embodiments can be implemented in various other forms, and various omissions, substitutions, changes, and combinations can be made without departing from the gist of the invention. The embodiments and modifications thereof are included in the scope and gist of the invention, and are included in the invention described in the claims and the equivalent scope thereof.

### REFERENCE SIGNS LIST

- 1: IC CARD
- 2 IC: CARD PROCESSING DEVICE
- 11, 21: PROCESSOR
- 12, 22: STORAGE UNIT
- 13: INTERFACE
- 23: CARD READER-WRITER
- 24: OPERATION UNIT
- 25: DISPLAY
- 111: ACQUISITION UNIT
- 112: DETERMINATION UNIT
- 113: CONTROL UNIT
- 114, 212: OUTPUT UNIT
- 115: COUNT UNIT
- 211: SIGNAL GENERATION UNIT

## Claims

1. A portable electronic device comprising:
a processor that executes a first process according to a command received from an external device, wherein
the processor:
determines whether first date data included in the command exceeds second date data as a reference;
when the first date data exceeds the second date data, executes a disabling process of disabling a predetermined function of a second process different from the first process and then executes the first process; and
when the first date data does not exceed the second date data, executes the first process without executing the disabling process.

2. The portable electronic device according to claim 1, wherein
the second process is an encryption process, and
the predetermined function is a function related to access control.

3. A portable electronic device comprising:
a processor that executes a predetermined process according to a command received from an external device, wherein
the processor:
determine whether access control included in the command is predetermined access control;
when determining that access control included in the command is the predetermined access control, executes a disabling process of disabling a function related to the predetermined access control and then executes the predetermined process, and
when determining that access control included in the command is not the predetermined access control, executes the predetermined process without executing the disabling process.

4. A portable electronic device comprising:
a processor that executes a predetermined process according to a command received from an external device, wherein
the processor:
determines whether access control included in the command is predetermined access control;
when determining that access control included in the command is the predetermined access control, determines whether an execution count of the predetermined access control exceeds a reference number;
when determining that the execution count of the predetermined access control exceeds the reference number, executes a disabling process of disabling the predetermined access control and then ends without executing the predetermined process;
when determining that the execution count of the predetermined access control does not exceed the reference number, increments the execution count and executes the predetermined process including the predetermined access control; and
when determining that access control included in the command is not the predetermined access control, executes the predetermined process.

5. The portable electronic device according to any one of claims 1 to 4, wherein
the processor executes the disabling process by deleting or initializing data.

6. The portable electronic device according to any one of claims 1 to 4, wherein
the processor executes the disabling process by enabling a disabling flag.

7. A method for controlling a portable electronic device, the method comprising:
determining whether first date data included in a command received from an external device exceeds second date data as a reference;
when the first date data exceeds the second date data, executing a disabling process of disabling a predetermined function of a second process different from a first process executed according to the command and then executing the first process; and
when the first date data does not exceed the second date data, executing the first process without executing the disabling process.
